# EUROPEAN PATENT APPLICATION

(11) **EP 2 341 383 A1**
(43) Date of publication of application: **06.07.2011**
(21) Application number: 09275126.2
(22) Date of filing: 17.12.2009
(51) Int. Cl.: G02B 17/08, G02B 5/04, G02B 27/01, G02B 27/28, G02B 13/00

(54) **Projector lens assembly**

(71) Applicant: BAE Systems PLC, London SW1Y 5AD (GB)
(72) Inventor: The designation of the inventor has not yet been filed
(74) Representative: Edis, Ronald Malcolm

(57) **Abstract**

A projector lens assembly is disclosed. The assembly comprises a first housing for housing a first lens arrangement, a second housing for housing a second lens arrangement and a polariser for reflecting light having a first polarisation and for transmitting light having a second polarisation. The first and second housing are arranged to align the polariser along an interface between the first and second housing, with respect to the first and second lens arrangements. The first lens arrangement is integrally formed with the first housing and the second lens arrangement is integrally formed with the second housing.

## Description

The present invention relates to a projector lens assembly.

Existing projector lens assemblies comprise a plurality of lenses housed within barrels which are mechanically coupled to an assembly housing. The barrels and housing serve to maintain the relative separation and orientation of the lenses. However, this requires an accurate alignment of the lenses within the barrels and of the barrels within the assembly housing. Accordingly, each lens, barrel and assembly housing must be manufactured to within small optomechanical tolerances to provide the required optical performance.

These tolerance requirements increase the cost and time of manufacture, and the size and weight of the lenses, barrels and housing add to the size and weight of the overall projector. This is a particular problem where the projector is mounted upon a helmet, for example when incorporated in a helmet mounted display, or when used in desktop or portable pico-projectors.

We have now devised an improved projector lens assembly which alleviates the above-mentioned problems.

In accordance with the present invention as seen from a first aspect, there is provided a projector lens assembly, the assembly comprising a first housing for housing a first lens arrangement, a second housing for housing a second lens arrangement, wherein
the first lens arrangement is integrally formed with the first housing and the second lens arrangement is integrally formed with the second housing.

The integral form of the housing and lens arrangements thus removes the need for a user to suitably align separate lenses of the assembly. Moreover, the integral nature of the housing and lens arrangements enables the assembly to be formed in a mould. Accordingly, once the mould has been suitably developed and manufactured to within the required tolerances, multiple lens assemblies can be made quickly and easily to the required specifications.

The first housing is preferably arranged to couple with the second housing along an interface therebetween, via coupling means. Preferably, the coupling means comprises a bonding agent, such as glue, and/or a plurality of the coupling formations disposed along the first and second housing.

Preferably, the plurality of coupling formations comprise a plurality of male and female type formations.

Preferably, the coupling means further provide an alignment of the first housing with respect to the second housing.

Preferably, the interface is substantially a planar interface.

Preferably, the assembly further comprises a polariser disposed along the interface for reflecting light having a first polarisation and for transmitting light having a second polarisation. Preferably, the first and second housing are arranged to align the polariser along an interface between the first and second housing with respect to the first and second lens arrangements.

The polariser is preferably substantially encapsulated by the first and second housing when the first and second housings are coupled together.

Preferably, the first lens arrangement and the first housing are formed of the same material.

Preferably, the second lens arrangement and the second housing are formed of the same material.

The first lens arrangement preferably comprises a first optical element orientated at a first angle with respect to the polariser and a second optical element orientated at a second angle with respect to the polariser.

Preferably, the second lens arrangement comprises a third optical element orientated at a third angle with respect to the polariser and a fourth optical element orientated at a fourth angle with respect to the polariser.

Preferably, the first and third angles are substantially the same angle. Preferably, the second and fourth angles are substantially the same angle.

The first, second, third and fourth angles are substantially **45⁰.**

The first housing and first lens arrangement are preferably moulded to form an integral arrangement.

The second housing and second lens arrangement are preferably moulded to form an integral arrangement.

The first and second housing preferably substantially separately comprise a triangular prism shape, such that the first and second housing forms a substantially cubic shape when coupled together.

Preferably, at least one of the optical elements comprises an aspheric lens. Alternatively, or in addition thereto, at least one of the optical elements comprise a refractive element. In a further alternative or further addition thereto, at least one of the optical elements comprise a diffractive element.

At least one of the first and second housing further comprises a mounting arrangement for mounting optical components to the respective housing. The mounting arrangement is preferably formed integrally with the respective housing.

The optical components may preferably comprise one or more of a liquid crystal on silicon panel, an illumination source or one or more lens arrangements.

In accordance with the present invention as seen from a second aspect, there is provided a head mountable display, the display comprising the projector lens assembly of the first aspect.

Preferred features of the head mountable display may comprise one or more of the preferred features of the projector lens assembly of the first aspect.

An embodiment of the present invention will now be described by way of example only and with reference to the accompanying drawings, in which:

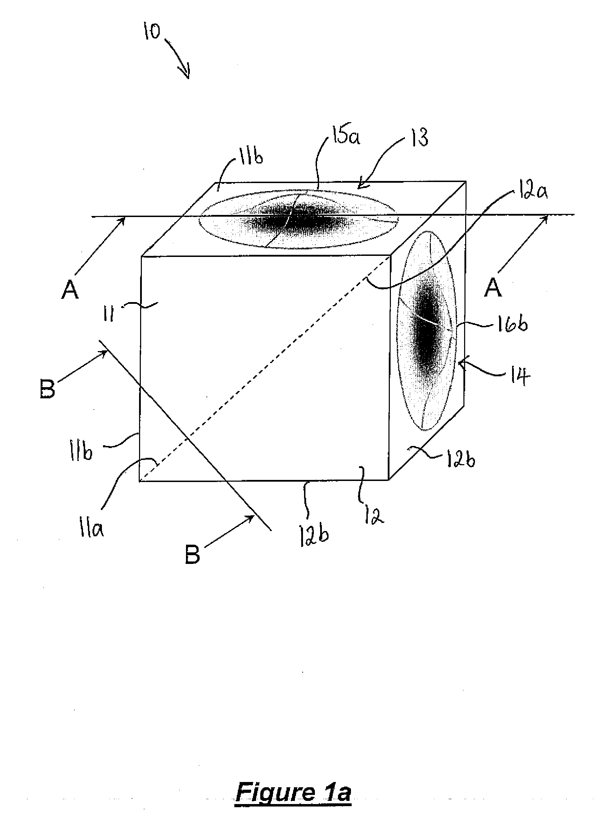

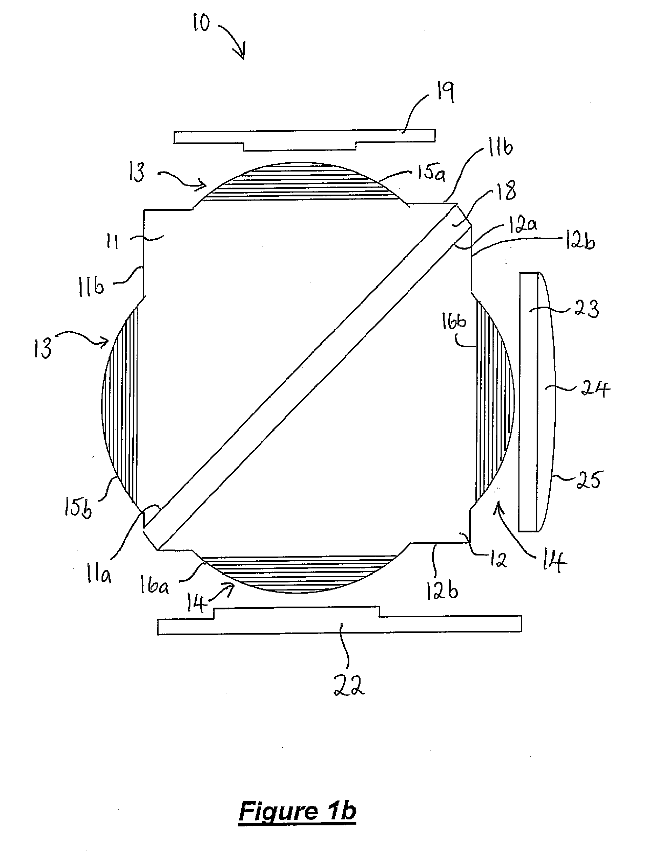

Figure 1 a is a perspective view of a projector lens assembly according to an embodiment of the present invention;
Figure 1 b is a sectional view of the projector assembly of Figure 1a, taken across line A-A;
Figure 2 is a sectional view across line B-B of the projector assembly of figure 1a;
Figure 3 is a view of the projector assembly of figure 1b, with integrally formed mounting arrangements; and,
Figure 4 is a view of the projector assembly of figure 1b illustrating the passage of light rays within the assembly.

Referring to figure 1 of the drawings, there is illustrated a projector lens assembly 10 according to an embodiment of the present invention. The assembly 10 comprises a first and second housing 11, 12 for housing a first and second lens arrangement 13, 14, respectively. The first housing 11 is formed of a plastic material and comprises a substantially triangular prism shape. The housing 11 1 comprises a substantially rectangular base 11 a and side faces 11 b, the latter of which extend from the base 11 a and which converge to form an edge 11c which extends along the length of the housing 11. The angle between the side faces 11 b comprises substantially 90º, such that the angle between each side face 11 b and the base 11a comprises substantially 45º.

The first lens arrangement 13 is formed integrally with the first housing 11, and comprises a first optical element 15a formed within one of the side faces 11 b and a second optical element 15b formed within the other side face 11 b. The optical elements 15a, 15b and first housing 11 are formed within a mould (not shown) so the alignment of the elements 15a, 15b with respect to the housing 11 becomes established by the mould (not shown).

The second housing 12 is similarly formed of a plastic material and comprises a substantially triangular prism shape. The housing 12 comprises a substantially rectangular base 12a and side faces 12b which extend from the base 12b and which converge to form an edge 12c which extends along the length of the housing. The angle between the side faces 12b comprises substantially 90º**,** such that the angle between each side face 12b and the base 12a comprises substantially 45º**.**

The second lens arrangement 14 is formed integrally with the second housing, and comprises a third optical element 16a formed within one of the side faces 12b and a fourth optical element 16b formed within the other side face 12b. The optical elements 16a, 16b and second housing 12 are formed within a mould (not shown) and so the alignment of the elements 16a, 16b with respect to the housing 12 is again established by the mould (not shown).

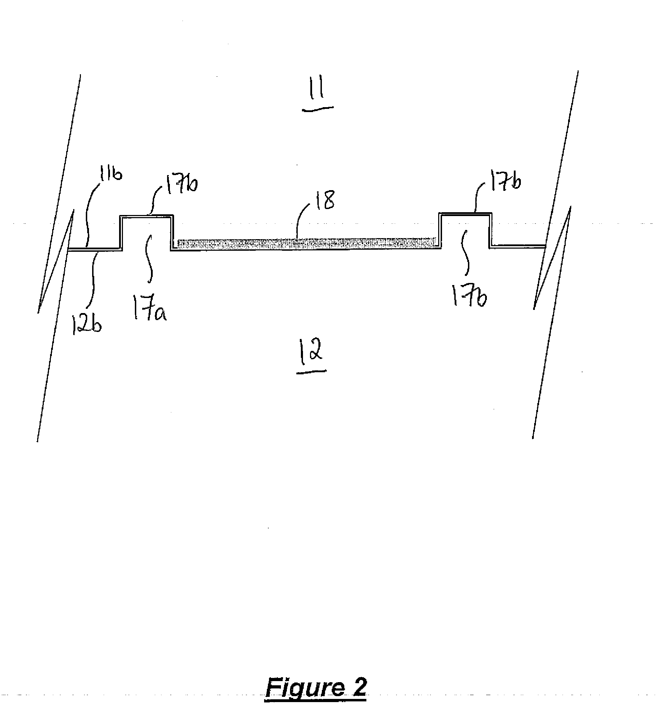

The first and second housing 11, 12 are arranged to couple together along the respective base 11 a, 12a, such that the base 11 a, 12a of each housing 11, 12 extend substantially adjacent each other and substantially parallel to each other, and so that the resulting assembly 10 comprises a substantially cubic shape. The base 11 a of the first housing 11 may be bonded or otherwise glued to the base 12a of the second housing 12, and/or the first and second housing 11, 12 may further comprise a first and second coupling arrangement such as a plurality of male and female formations 17a, 17b formed integrally with the respective base, as illustrated in figure 2 of the drawings. The male and female formations 17a, 17b permit the first and second housing 11, 12 to couple together, and further serve to align the first and second housing 11, 12 and thus the optical elements 15, 16 to achieve and maintain the required optical performance of the assembly 10.

The projector lens assembly 10 further comprises a polarising grid 18 disposed at the interface between the respective bases 11a, 12a and which is arranged to extend along the plane of the interface. The grid 18 is configured to reflect light incident thereon having a first polarisation state and to transmit light incident thereon having a second polarisation state, which is substantially orthogonal to the first polarisation state.

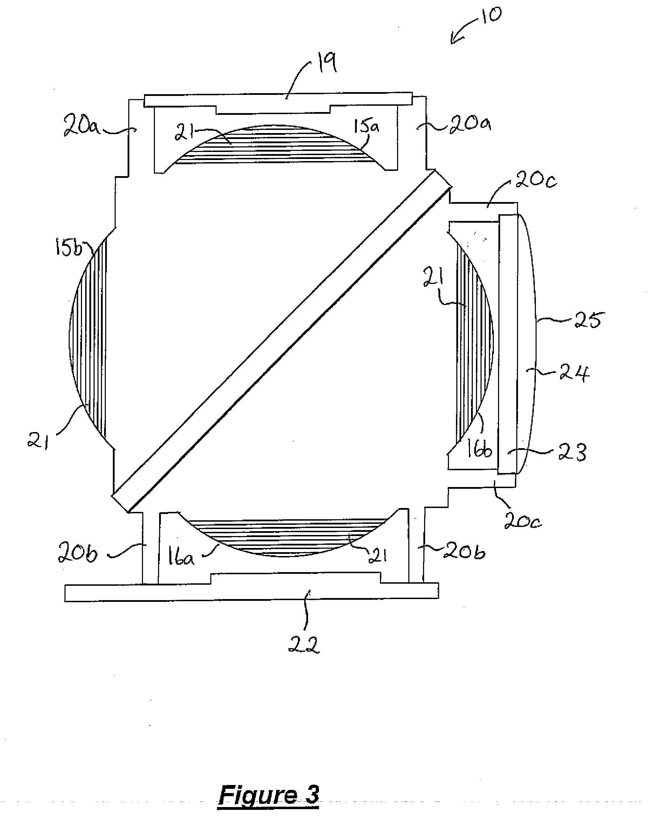

Referring to figure 3 of the drawings, the first and second housing 11, 12 of the assembly 10 may be moulded to further comprise a mounting arrangement for mounting further optical elements, such as a light source 19 or a further lens system, at the correct optical alignment with respect to the optical elements 15, 16. The mounting arrangement of each housing 11, 12 may comprise a pair of legs 20 which extend from one or both of the respective side faces 11 b, 12b and which are formed integrally therewith, so that there is no requirement for a user (not shown) to suitably align the further elements with respect to the projector lens assembly 10.

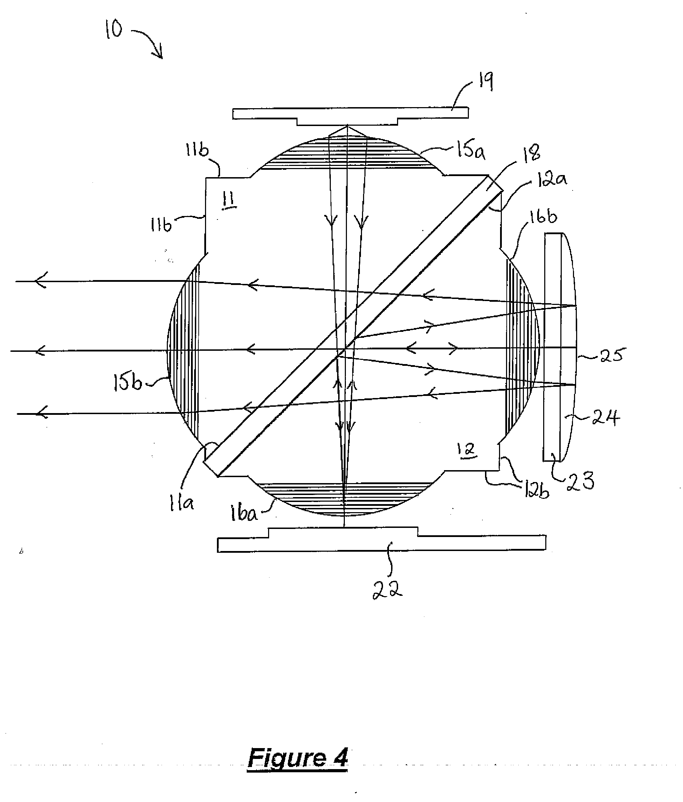

Referring to figures 3 and 4 of the drawings, in use, a light source 19 is mounted upon a first pair of mounting legs 20a positioned above the first optical element 15a. The source 19 is subsequently switched on and the light transmitted therefrom is captured by the first optical element 15a, which may comprise an aspheric lens, for example. The aspheric shape of the lens enables the lens to collect as much light as possible from the light source. The lens comprises a refractive or diffractive grating 21 formed on the surface thereof which allows for colour correction, thereby enabling the projector lens assembly 10 to display a full range of colour images. The light source 19 is arranged to generate polarised light and is orientated such that the polarisation state of the light transmitted therefrom is correctly oriented to be transmitted by the wire grid polariser 18 disposed at the interface between the first and second housing 11, 12. Accordingly, upon passing through the polarising grid 18, the light enters the second housing 12 and becomes captured by the third optical element 16a, such as a field lens, which may comprise an aspheric hybrid lens comprising a diffraction grating 21 formed on the surface thereof. The light transmitted through the field lens 16a is made substantially telecentric by the lens 16a, and is arranged to illuminate a liquid crystal on silicon (LCoS) panel 22 mounted upon a further pair of mounting legs 20b. The LCoS panel 22 comprises a reflecting surface comprising a plurality of pixels (not shown) which are switched "on" or "off" to generate the required image pattern. The "on-pixels" are arranged to reflect incident light and rotate the polarisation state of the incident light by 90º, such that the image bearing light that becomes reflected off the LCoS 22 travels back into the second housing 12 through the field lens 16a and becomes reflected from the wire grid polariser 18 toward the fourth optical element 16b.

The fourth optical element 16b comprises an aspheric hybrid lens with a diffraction grating 21 formed on the surface thereof and light which passes through this element 16b is arranged to pass within a quarterwave plate 23 held upon a further pair of mounting legs 20c. The quarterwave plate 23 transforms the linear polarised light to a circular polarisation state and is assembled to a plano-convex element 24 which comprises a mirrored convex surface 25 which reflects the image bearing light back through the quarterwave plate 23. This subsequent passage of light through the quarterwave plate 23 transforms the circularly polarised light into an orthogonal polarisation state to that which was reflected from the LCoS panel 22, such that it can now transmit through the wire grid polariser 18.

The image bearing light which becomes transmitted through the polariser 18, subsequently passes through the final optical element, namely the second optical element 15b mounted upon a further pair of mounting legs (not shown), which again may be an aspheric hybrid lens comprising a diffraction grating 21 on the surface thereof. The resulting image may then be collimated to serve as a light engine (not shown) for a head-mounted/helmet-mounted or a head-up display (not shown), or focused to form a real image on a projection surface for a pico-projector (not shown). The reduced size of the lens assembly 10 compared with conventional mechanical housing and lens barrel arrangements (not shown) enables the assembly to fit more easily inside a typical hand-held communication device such as a mobile phone (not shown), a music player (not shown) or a multi-media device. Moreover, the reduced size and mass of the assembly 10 compared with existing arrangements, serves to reduce the head borne weight of head/helmet-mounted displays (not shown).

From the foregoing therefore it is evident that the projector lens assembly of the present invention provides a simple yet effective means of generating a projected light image.

## Claims

1. A projector lens assembly, the assembly comprising a first housing for housing a first lens arrangement, a second housing for housing a second lens arrangement, wherein
the first lens arrangement is integrally formed with the first housing and the second lens arrangement is integrally formed with the second housing.

2. An assembly according to claim 1, wherein the first housing is arranged to couple with the second housing along an interface therebetween via coupling means.

3. An assembly according to claim 2, wherein the coupling means comprises a plurality of the coupling formations disposed along the first and second housing.

4. An assembly according to claim 3, wherein the coupling means further provides an alignment of the first housing with respect to the second housing.

5. An assembly according to any preceding claim, further comprising a polariser which is arranged to extend along an interface between the first and second housing for reflecting light having a first polarisation and for transmitting light having a second polarisation.

6. An assembly according to claim 5, wherein the first and second housing are arranged to align the polariser along the interface between the first and second housing with respect to the first and second lens arrangements.

7. An assembly according to claim 5 or 6, wherein the polariser is substantially encapsulated by the first and second housing when the first and second housings are coupled together.

8. An assembly according any preceding claim, wherein the first lens arrangement and the first housing are formed of the same material.

9. An assembly according to any preceding claim, wherein the second lens arrangement and the second housing are formed of the same material.

10. An assembly according to any preceding claim, wherein the first lens arrangement comprises a first optical element orientated at a first angle with respect to the polariser and a second optical element orientated at a second angle with respect to the polariser.

11. An assembly according to any preceding claim, wherein the second lens arrangement comprises a third optical element orientated at a third angle with respect to the polariser and a fourth optical element orientated at a fourth angle with respect to the polariser.

12. An assembly according to claim 10 and 11, wherein the first and third angles are substantially the same angle, and the second and fourth angles are substantially the same angle.

13. An assembly according to any preceding claim, wherein the first housing and first lens arrangement are moulded to form an integral arrangement, and the second housing and second lens arrangement are moulded to form an integral arrangement.

14. An assembly according to claim 10 and 11, wherein at least one of the optical elements comprise an aspheric lens.

15. An assembly according to claim 10 and 11, or 22, wherein at least one of the optical elements comprise or further comprise a refractive or diffractive element.

16. An assembly according to any preceding claim, wherein at least one of the first and second housing further comprises a mounting arrangement for mounting optical components to the respective housing.

17. An assembly according to claim 16, wherein the mounting arrangement is formed integrally with the respective housing.

18. A head mountable display comprising a projector lens assembly according to any preceding claim.
